# EUROPÄISCHE PATENTSCHRIFT

(11) **EP 3 931 270 B1**
(45) Veröffentlichungstag und Bekanntmachung des Hinweises auf die Patenterteilung: **07.09.2022**
(21) Anmeldenummer: 19708498.1
(22) Anmeldetag: 28.02.2019
(51) Int. Cl.: C09D 5/03, C09D 131/04, C08L 29/04

(54) **IN WASSER REDISPERGIERBARE PULVERFARBEN-ZUSAMMENSETZUNG**
IN WATER DISPERSIBLE POWDER COATING COMPOSITION
COMPOSITION DE REVÊTEMENT EN POUDRE REDISPERSIBLE DANS L'EAU

(43) Veröffentlichungstag der Anmeldung: 05.01.2022
(73) Patentinhaber: Wacker Chemie AG, 81737 München (DE)
(72) Erfinder: BEMERT, Lada, 84543 Winhöring (DE); BONIN, Klaus, 84489 Burghausen (DE); KOTSCHI, Udo, 84489 Burghausen (DE); WEITZEL, Hans-Peter, 84571 Reischach (DE); ZEH, Harald, 84489 Burghausen (DE)
(74) Vertreter: Ege, Markus
(86) Internationale Anmeldenummer: PCT/EP2019/055032
(87) Internationale Veröffentlichungsnummer: WO 2020/173571

(56) Entgegenhaltungen:
- EP-A1- 1 593 721
- WO-A1-2006/058655
- WO-A1-2006/061139
- WO-A1-2016/092047

## Beschreibung

Die Erfindung betrifft die Verwendung einer Pulverfarben-Zusammenset-zung zur Herstellung von Dispersionsfarben.

Kunstharzdispersionsfarben oder umgangssprachlich Dispersionsfarben gehören wegen ihrer einfachen Verarbeitbarkeit, den universellen Gestaltungsmöglichkeiten (Farbgebung, Effekte) und aus Gründen des Umweltschutzes (Vermeidung von Lösemittelemissionen) zu der am meisten verwendeten Produktgruppe der Lacke und Farben. Die Hauptanwendung von Dispersionsfarben ist die als Wandfarbe im Innenbereich und im Außenbereich.

Dispersionsfarben sind bei geschlossenem Behälter lange haltbar. Doch ist der Behälter erst einmal geöffnet, gelangen schnell Keime in die Dispersionsfarbe, was zu deren biologischem Abbau und zur Schimmelbildung führen kann. Zum Schutz vor bakteriellem Befall werden bei Dispersionsfarben daher Konservierungsmittel wie Isothiazolinone eingesetzt, welche insbesondere bei Allergikern Reizungen und Hautirritationen hervorrufen können. Alternativ dazu wird in der Dispersionsfarbe ein stark alkalischer pH-Wert von bis zu pH = 13 eingestellt. Solche stark alkalisierten Dispersionsfarben können ebenfalls zu Reizungen und Schädigung der Haut führen. Es sind deshalb aufwändige Vorkehrungen zum Arbeitsschutz erforderlich.

Mit der Verwendung einer trockenen Pulverfarbe, deren Zusammensetzung bis auf den Wasseranteil der Zusammensetzung der Dispersionsfarbe entspricht, könnten die obengenannten Nachteile überwunden werden. Bei einer wasserfreien Pulverfarbe ist kein Schutz vor Verkeimung während der Lagerung erforderlich. Deshalb können Lagerung und Transport einer trockenen Pulverfarbe in einem wesentlich breiteren Temperaturintervall und über einen wesentlich längeren Zeitraum als bei wässrigen Dispersionsfarben-Formulierungen erfolgen. Ein weiterer Vorteil beim Transport einer Pulverfarben-Zusammensetzung ist der, dass sich das Gewicht der Farbe um den Wasseranteil reduziert. Von Vorteil ist auch, dass mit einer Pulverfarben-Zusammensetzung bei deren Verarbeitung die erforderliche Menge an wässriger Dispersionsfarbe hergestellt werden kann, und der Rest der Pulverfarbe weiterhin aufbewahrt werden kann. Das Volumen von zu entsorgenden Farbresten wird damit effektiv reduziert.

In der DE 4300319 C1 wird ein wasserlösliches Farbpulver beschrieben aus dem unter Zugabe von Wasser eine Dispersionsfarbe hergestellt werden kann. Als Bindemittel wird ein Copolymer aus Vinylacetat und Ethylen vorgeschlagen. Die WO 2000/047682 A1 beschreibt eine Trockenpulver-Zusammensetzung, welche nach Zumischung von Wasser, als Beschichtungsmittel für Gipsplatten-Wandpanele eingesetzt werden kann. Bindemittel ist ein Vinylacetat-Ethylen-Copolymer. In der DE 19751553 A1 werden wässrige Dispersionen und in Wasser redispergierbare Polymerpulver, welche ein vernetzbares Polymerisat mit mehrfach ethylenisch ungesättigten Monomereinheiten enthalten, als Bindemittel für Dispersionsfarben und Pulverfarben und Putz beschrieben. Aus der DE 102004022405 A1 ist die Verwendung von mit Schutzkolloid stabilisierten Mischpolymerisaten in Form deren wässrigen Polymerdispersionen oder in Wasser redispergierbaren Polymerpulver in zementfreien oder zementarmen Beschichtungsmitteln bekannt.

Es bestand die Aufgabe eine Pulverfarben-Zusammensetzung zur Verfügung zu stellen, bei deren Verwendung zur Herstellung von Dispersionsfarben, Beschichtungsmittel erhalten werden, mit denen Anstriche mit hoher Nassabriebsfestigkeit und hoher Deckkraft erhalten werden.

Gegenstand der Erfindung ist die Verwendung einer Pulverfarben-Zusammensetzung zur Herstellung von wässrigen Dispersionsfarben, wobei die Pulverfarben-Zusammensetzung
a) mindestens ein in Wasser redispergierbares Polymerpulver,
b) Pigment und Füllstoff, und c) gegebenenfalls weitere Zusatzstoffe und gegebenenfalls ein oder mehrere hydraulische Bindemittel ausgewählt aus der Gruppe umfassend Zement, Gips, Kalk und Wasserglas enthält,
dadurch gekennzeichnet, dass das in Wasser redispergierbare Polymerpulver a) ein mit Polyvinylalkohol stabilisiertes Mischpolymerisat ist, auf der Basis von a1) 50 bis 95 Gew.-% Vinylacetat, a2) 1 bis 30 Gew.-% Ethylen, a3) 0 bis 20 Gew.-% Vinylester von langkettigen, gegebenenfalls verzweigten C₃- bis C₁₂-Carbonsäuren, a4) 0 bis 10 Gew.-% weiterer damit copolymerisierbarer ethylenisch ungesättigter Comonomere, wobei sich die Angaben in Gew.-% jeweils auf 100 Gew.-% aufaddieren, und als Polyvinylalkohol ein Gemisch aus mindestens einem Polyvinylalkohol mit einem Hydrolysegrad von 80 bis 95 Mol-% und einer Viskosität nach Höppler (4 %-ige wässrige Lösung, Methode nach Höppler bei 20°C, DIN 53015) von 1 bis 5 mPas und mindestens einem Polyvinylalkohol mit einem Hydrolysegrad von 80 bis 95 Mol-% und einer Viskosität nach Höppler von 6 bis 40 mPas enthalten ist, mit der Maßgabe, dass eine hydraulische Bindemittel enthaltende Pulverfarben-Zusammensetzung 0,1 bis 10 Gew.-% an hydraulischen Bindemittel enthält, bezogen auf das Gesamtgewicht der Pulverfarben-Zusammensetzung.

In Wasser redispergierbare Polymerpulver-Zusammensetzungen (Dispersionspulver) werden im Allgemeinen durch Trocknung der entsprechenden wässrigen Dispersionen eines Basispolymerisats hergestellt. Die Herstellung der wässrigen Dispersion des Basispolymerisats erfolgt vorzugsweise mittels radikalisch initiierter Emulsionspolymerisation von einem oder mehreren ethylenisch ungesättigten Monomeren. Die damit erhaltene wässrige Dispersion des Basispolymerisats wird anschließend, vorzugsweise in Gegenwart von einer Trocknungshilfe (im Allgemeinen ein Schutzkolloid), beispielsweise mittels Sprühtrocknung, getrocknet. Gegebenenfalls können während oder nach der Trocknung noch Antiblockmittel oder weitere Additive zugegeben werden. Aufgrund des Schutzkolloidanteils wird zum einen beim Trocknungsvorgang verhindert, dass die Polymerteilchen irreversibel verkleben, da die Polymerteilchen von den Schutzkolloid-Teilchen umhüllt werden. Zum anderen bewirkt diese Schutzkolloid-Matrix, welche sich beim Dispergieren der Polymerpulverzusammensetzung in Wasser wieder auflöst, dass die Polymerpartikel wieder mit der Partikelgröße der Ausgangsdispersion in der wässrigen (Re)dispersion vorliegen (TIZ-Fachberichte, 1985, Vol. 109 (9), 698).

Das in Wasser redispergierbare Polymerpulver (Dispersionspulver) a) wird mittels radikalisch initierter wässriger Emulsionspolymerisation der Comonomere a1), a2), gegebenenfalls a3) und gegebenenfalls a4) und anschließender Trocknung der damit erhaltenen wässrigen Dispersion des Mischpolymerisats erhalten.

Im Allgemeinen werden 50 bis 95 Gew.-%, vorzugsweise 60 bis 95 Gew.-%, besonders bevorzugt 80 bis 95 Gew.-%, jeweils bezogen auf das Gesamtgewicht der Comonomere, Vinylacetat a1) copolymerisiert. Im Allgemeinen werden 1 bis 30 Gew.-%, vorzugsweise 5 bis 20 Gew.-%, jeweils bezogen auf das Gesamtgewicht der Comonomere, Ethylen a2) copolymerisiert.

Geeignete Vinylester a3) von langkettigen, gegebenenfalls verzweigten C₃- bis C₁₂-Carbonsäuren sind Vinylpropionat, Vinylbutyrat, Vinyl-2-ethylhexanoat, Vinyllaurat, 1-Methylvinylacetat, Vinylpivalat, Vinylester der Neodecansäure, und Vinylester von alpha-verzweigten Monocarbonsäuren mit 5 bis 12 C-Atomen, beispielsweise VeoVa9^{R} oder Ve-oVa10^{R} (Handelsnamen der Firma Resolution) oder VERSA10^{R} (Handelsname der Wacker Chemie AG). Besonders bevorzugt sind Vinyllaurat, Vinylester der Neodecansäure und die Vinylester von alpha-verzweigten Carbonsäuren mit 9 oder 10 C-Atomen (VeoVa9^{R}, VeoVa10^{R} oder VERSA10^{R}). Im Allgemeinen werden 0 bis 20 Gew.-%, vorzugsweise 10 bis 20 Gew.-%, jeweils bezogen auf das Gesamtgewicht der Comonomere, der Vinylester a3) copolymerisiert.

Beispiele für weitere damit copolymerisierbare Comonomere a4) sind ethylenisch ungesättigte Mono- und Dicarbonsäuren, vorzugsweise Acrylsäure, Methacrylsäure und Fumarsäure; ethylenisch ungesättigte Carbonsäureamide und -nitrile, vorzugsweise Acrylamid und Acrylnitril; Diester der Fumarsäure wie die Diethyl- und Diisopropylester, ethylenisch ungesättigte Sulfonsäuren und deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat (GMA) und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können, insbesonders Vinyltrimethoxysilan und Vinyltriethoxysilan. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat. Weitere Beispiele sind auch Vinylether, wie Methyl-, Ethyl- oder iso-Butylvinylether.

Vorzugsweise werden die Hilfsmonomere a4) in einer Menge von 0,5 bis 10 Gew.-%, jeweils bezogen auf das Gesamtgewicht der Comonomere, copolymerisiert. Bevorzugte Hilfsmonomere sind die ethylenisch ungesättigten Mono- und Dicarbonsäuren wie Acrylsäure, Methacrylsäure und Maleinsäure(anhydrid), die ethylenisch ungesättigten Sulfonsäuren und deren Salze wie Vinylsulfonsäure, die epoxidfunktionellen Comonomere wie Glycidylmethacrylat, die siliciumfunktionellen Comonomere wie Vinyltriethoxysilan, sowie Gemische der genannten Hilfsmonomere. Vorzugsweise werden keine mehrfach ethylenisch ungesättigte Comonomere copolymerisiert.

Besonders bevorzugt werden Mischpolymerisate von 80 bis 95 Gew.-% Vinylacetat und 5 bis 20 Gew.-% Ethylen, und gegebenenfalls noch Hilfsmonomer a4). Besonders bevorzugt werden auch Mischpolymerisate von 60 bis 85 Gew.-% Vinylacetat a1), 1 bis 30 Gew.-% Ethylen a2) und 10 bis 20 Gew.-% Vinylester a3) von langkettigen, gegebenenfalls verzweigten C₃- bis C₁₂-Carbonsäuren, gegebenenfalls noch Hilfsmonomere a4). Die Angaben in Gew.-% addieren sich jeweils auf 100 Gew.-% auf.

Die Herstellung der wässrigen Dispersionen des Mischpolymerisats erfolgt nach dem Emulsionspolymerisationsverfahren, wobei die Polymerisationstemperatur im Allgemeinen 40°C bis 120°C, vorzugsweise 60°C bis 90°C beträgt und wobei bei einem Druck von im Allgemeinen 5 bis 100 bar abs. gearbeitet wird. Die Initiierung der Polymerisation erfolgt vorzugsweise mit den für die Emulsionspolymerisation gebräuchlichen Redox-Initiator-Kombinationen. Beispiele für geeignete Oxidationsinitiatoren sind die Natrium-, Kalium- und Ammoniumsalze der Peroxodischwefelsäure und Wasserstoffperoxid. Die genannten Initiatoren werden im Allgemeinen in einer Menge von 0,01 bis 2,0 Gew.-%, bezogen auf das Gesamtgewicht der Monomere, eingesetzt. Geeignete Reduktionsmittel sind beispielsweise Natriumhydroxymethansulfinat (Brüggolit), Brüggolit FF6 und (Iso-)Ascorbinsäure. Die Reduktionsmittelmenge beträgt vorzugsweise 0,01 bis 3 Gew.-%, bezogen auf das Gesamtgewicht der Monomere. Die genannten Oxidationsmittel, insbesondere die Salze der Peroxodischwefelsäure, können auch alleinig als thermische Initiatoren eingesetzt werden.

Die Polymerisation erfolgt in Gegenwart von 2 bis 10 Gew.-%, bezogen auf das Gesamtgewicht der Comonomeren, eines oder mehrerer, teilverseifter und niedermolekularer Polyvinylalkohole mit einem Hydrolysegrad von jeweils 80 bis 95 Mol-% und einer Höppler-Viskosität, in 4 %-iger wässriger Lösung, von jeweils 1 bis 5 mPas (Methode nach Höppler bei 20°C, DIN 53015). Der Hydrolysegrad der teilverseiften und niedermolekularen Polyvinylalkohole beträgt vorzugsweise 85 bis 90 Mol-%, besonders bevorzugt 87 bis 89 Mol-%. Die Höppler-Viskosität in 4 %-iger wässriger Lösung, der teilverseiften und niedermolekularen Polyvinylalkohole, beträgt vorzugsweise 2 bis 4 mPas (Methode nach Höppler bei 20°C, DIN 53015). Gegebenenfalls können auch teilverseifte und höhermolekulare Polyvinylalkohole mit einem Hydrolysegrad von vorzugsweise 80 bis 95 Mol-% und einer Höppler-Viskosität in 4 %-iger wässriger Lösung von 6 bis 40 mPas (Methode nach Höppler bei 20°C, DIN 53015) alleine oder im Gemisch mit den teilverseiften und niedermolekularen Polyvinylalkoholen eingesetzt werden. Die genannten Polyvinylalkohole sind im Handel erhältlich und mittels dem Fachmann bekannter Verfahren zugänglich.

Gegebenenfalls können zusätzlich noch geringe Mengen an Emulgatoren, beispielsweise anionische und/oder nichtionische Emulgatoren, bei der Polymerisation verwendet werden, beispielsweise 0,1 bis 2,0 Gew.-%, bezogen auf das Gesamtgewicht der Comonomeren. Beispiele für anionische Emulgatoren sind Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen. Beispiele für nichtionische Emulgatoren sind C₁₂-C₁₄-Fettalkoholethoxylate mit einem Ethoxylierungsgrad von 3 bis 20 Ethylenoxid-Einheiten. Vorzugsweise werden während der Polymerisation keine Emulgatoren verwendet, und auch keine Emulgatoren nachträglich zugegeben.

Das in Wasser redispergierbare Polymerpulver (Dispersionspulver) a) wird mittels Trocknung der entsprechenden wässrigen Dispersionen des Mischpolymerisats hergestellt. Die Trocknung erfolgt mittels Sprühtrocknung in Gegenwart des Gemisches aus mindestens einem Polyvinylalkohol mit einem Hydrolysegrad von 80 bis 95 Mol-% und einer Viskosität nach Höppler von 1 bis 5 mPas, und mindestens einem Polyvinylalkohol mit einem Hydrolysegrad von 80 bis 95 Mol-% und einer Viskosität nach Höppler von 6 bis 40 mPas. Die Polyvinylalkohole werden dabei in einer solchen Menge eingesetzt, dass deren Gewichtsanteil im Dispersionspulver 2 bis 30 Gew.-%, bezogen auf das Gewicht des Mischpolymerisats beträgt. Das Mengenverhältnis des Anteils an niederviskosem Polyvinylalkohol zu höher viskosem Polyvinylalkohol beträgt von 1 : 50 bis 50 : 1, vorzugsweise von 1 : 10 bis 10 : 1.

Die Sprühtrocknung erfolgt mittels Zerstäubung im Sprühtrockner. Als Trocknungsgas wird im Allgemeinen Luft eingesetzt. Zur Beschleunigung der Trocknung wird das Trocknungsgas vorerwärmt, vorzugsweise auf eine Eintrittstemperatur von 130°C bis 210°C (Heißluft). Im Allgemeinen wird noch Antiblockmittel zugegeben. Geeignete Antiblockmittel (Antibackmittel) sind dem Fachmann bekannt, beispielsweise Aluminiumsilikate wie Kaolin, pyrogene Kieselsäure oder gefällte Kieselsäure oder Carbonate wie Calciumcarbonat oder Magnesiumcarbonat. Die Antiblockmittel werden im Allgemeinen in einer Menge von 0,1 bis 30 Gew.-%, vorzugsweise 2 bis 30 Gew.-%, besonders bevorzugt 7 bis 30 Gew.-%, jeweils bezogen auf das Gesamtgewicht der polymeren Bestandteile (Mischpolymerisat und Polyvinylalkohole) der zu zerstäubenden Polymerisatdispersion eingesetzt. Gegebenenfalls kann das Antiblockmittel auch ganz oder teilweise dem fertig getrockneten Polymerpulver vor oder nach dessen Abscheidung vom Trocknungsgas zugegeben werden. Die Pulverfarben-Zusammensetzung enthält im Allgemeinen 5 bis 30 Gew.-%, vorzugweise 20 bis 30 Gew.-% von einem oder mehreren in Wasser redispergierbaren Polymerpulvern a), jeweils bezogen auf das Gesamtgewicht der Pulverfarben-Zusammensetzung.

Zur Optimierung der Viskosität und zur Optimierung der Deckkraft der mit den Pulverfarben erhältlichen Dispersionsfarben werden bevorzugt in Wasser redispergierbare Polymerpulver a) mit einem Polyvinylalkohol-Anteil von 10 bis 30 Gew.-%, vorzugsweise 20 bis 30 Gew.-%, jeweils bezogen auf das Gewicht des Mischpolymerisats, in der Pulverfarben-Rezeptur verwendet. Diese in Wasser redispergierbaren Polymerpulver a) mit erhöhtem Polyvinylalkohol-Anteil von vorzugsweise 20 bis 30 Gew.-% können alleine oder im Gemisch mit einem in Wasser redispergierbaren Polymerpulver a) mit geringerem Polyvinylalkohol-Anteil in der Pulverfarben-Rezeptur verwendet werden.

Die Pulverfarben-Zusammensetzung kann auch ein oder mehrere hydraulische Bindemittel enthalten, beispielsweise Zement (Portland-, Aluminat-, Hütten-, Magnesia-, Phosphatzement), Gips, Kalk und Wasserglas. Wenn die Pulverfarben-Zusammensetzung ein hydraulisches Bindemittel enthält, beträgt der Anteil an hydraulischem Bindemittel 0,1 bis 10 Gew.-%, bezogen auf das Gesamtgewicht der Pulverfarben-Zusammensetzung.

Durch Zugabe von Zement oder Kalk zu der trockenen Formulierung kann auch gezielt und nach Bedarf der pH-Wert einer Pulverfarbe eingestellt werden. Weitere Beispiele für Stellmittel sind Silikonate wie Kaliummethylsilikonate, Amine, Polyamine, und Polyethylenimine. Es sind sowohl Formulierungen mit als auch ohne pH-Stellmittel möglich.

Geeignete Pigmente und deren Mengenanteile in einer Pulverfarben-Rezeptur sind dem Fachmann bekannt. Beispiele für Pigmente sind anorganische Pigmente wie Titandioxid, Bariumsulfat, Bornitrid und Zinkoxid für weiße Dispersionsfarben, Eisenoxide wie Eisenoxidrot, Natrium-Aluminium-Sulfo-Silikat (Ultramarinblau Pigment Blue 29:77007). Der Mengenanteil der Pigmente in der Pulverfarben-Zusammensetzung beträgt im Allgemeinen 1 bis 35 Gew.-%, vorzugsweise 5 bis 15 Gew.-%, jeweils bezogen auf das Gesamtgewicht der Pulverfarben-Zusammensetzung.

Geeignete Füllstoffe sind beispielsweise Carbonate wie Calciumcarbonat in Form von Kreide, Dolomit und Calcit. Geeignet sind auch Silikate wie Quarzmehl, Feldspat, Kaolin und Talkum. Geeignet sind auch Faserfüllstoffe wie Cellulosefasern. In der Praxis werden häufig Gemische von Füllstoffen eingesetzt. Der Mengenanteil der Füllstoffe in der Pulverfarben-Zusammensetzung beträgt im Allgemeinen 20 bis 95 Gew.-%, vorzugsweise 30 bis 60 Gew.-%, jeweils bezogen auf das Gesamtgewicht der Pulverfarben-Zusammensetzung.

Gebräuchliche Zusatzstoffe c) in Pulverfarben-Zusammensetzungen sind Dispergiermittel, Netzmittel, Verdickungsmittel, Hydrophobierungsmittel, Entschäumer, Filmbildehilfsmittel, Weichmacher, und Schutzkolloide. Solche Zusatzstoffe sind im Handel erhältlich und deren Einsatzmengen sind dem Fachmann bekannt.

Beispiele für Dispergiermittel und Netzmittel sind Natrium- und Kalium-Polyphosphate sowie Polyacrylsäuren und deren Salze. Diese werden im Allgemeinen in Anteilen von 0,1 bis 1 Gew.-%, bezogen auf das Gesamtgewicht der Pulverfarben-Zusammensetzung eingesetzt.

Beispiele für Verdickungsmittel und Schutzkolloide sind Celluloseether wie Carboxymethylcellulose, Hydroxyethylcellulose, Stärke und Polyvinylalkohol. Bentonit ist ein Beispiel für ein anorganisches Verdickungsmittel. Die Verdickungsmittel und Schutzkolloide werden im Allgemeinen in einer Menge von jeweils 0,01 bis 2 Gew.-%, bezogen auf das Gesamtgewicht der Pulverfarben-Zusammensetzung eingesetzt. Beispiele für Hydrophobierungsmittel sind Silane und Fettsäureester. Beispiele für Entschäumer sind Silikonöle, Polyglykole.

Beispiele für Filmbildehilfsmittel sind Esteralkohol-Gemische wie Texanol^{R}.

Zur Herstellung der Pulverfarben-Zusammensetzung können die einzelnen Bestandteile in Form deren feinteiligen Pulver in einem Pulvermischer miteinander vermischt werden. Alternativ dazu kann auch so vorgegangen werden, dass die Bestandteile b) und c) der Pulverfarben-Zusammensetzung zusammen mit der wässrigen Dispersion des Mischpolymerisats zur Herstellung des in Wasser redispergierbaren Polymerpulvers a) vermischt werden, und diese wässrige Mischung anschließend sprühgetrocknet wird. Dabei wird eine Pulverfarben-Zusammensetzung erhalten, welche sich durch besonders gute Dispergierbarkeit in Wasser auszeichnet. Das zuletzt genannte Verfahren zeichnet sich durch die Reduktion der Staubbildung während der Herstellung der Pulverfarben-Zusammensetzung aus.

Die Pulverfarben-Zusammensetzung eignet sich zur Herstellung von wässrigen Dispersionsfarben. Dazu kann der Wasseranteil vorgelegt werden und die Pulverfarben-Zusammensetzung dem Wasser unter Rühren zugemischt werden, oder in umgekehrter Reihenfolge vorgegangen werden, und gegebenenfalls anschließend homogenisiert werden.

Gegenüber wässrigen Dispersionsfarben zeichnet sich die Pulverfarben-Zusammensetzung durch bessere Lagerstabilität aus. Die Pulverfarben-Zusammensetzung ist froststabil, hitzestabil, es kann kein Skinning auftreten, und der Zusatz von Biozid ist entbehrlich. Die Pulverfarben-Zusammensetzung hat im Vergleich zu wässrigen Dispersionsfarben einen reduzierten Verpackungsbedarf. Es ist keine Abpackung in Plastikeimern erforderlich. Bei der Verarbeitung der Pulverfarben-Zusammensetzung kann exakt die benötigte Menge an Dispersionsfarbe hergestellt werden. Die Verwendung der Pulverfarben-Zusammensetzung ist daher verbrauchsfreundlich und abfallfrei.

Die nachfolgenden Beispiele dienen der weiteren Erläuterung der Erfindung:
Folgende Dispersionspulver wurden zur Testung eingesetzt:
Dispersionspulver 1 (DP 1):
   In Wasser redispergierbares Vinylacetat-Ethylen-Copolymerpulver (85,5 Gew.-% Vinylacetat und 14,5 Gew.-% Ethylen) mit 13 Gew.-%, bezogen auf VAE-Copolymer, eines Polyvinylalkohol-Gemisches*.
Dispersionspulver 2 (DP 2):
   In Wasser redispergierbares Vinylacetat-Ethylen-VERSA10^{R}-Copolymerpulver (53 Gew.-% Vinylacetat, 27 Gew.-% Ethylen und 20 Gew.-% VERSA10^{R}) mit 12 Gew.-%, bezogen auf Copolymer, eines Polyvinylalkohol-Gemisches*.
Dispersionspulver 3 (DP 3):
   In Wasser redispergierbares Vinylacetat-Ethylen-VERSA10^{R}-Copolymerpulver (69,3 Gew.-% Vinylacetat, 13,4 Gew.-% Ethylen und 17,3 Gew.-% VERSA10^{R}) mit 14 Gew.-%, bezogen auf Copolymer, eines Polyvinylalkohol-Gemisches* und 2 Gew.-%, bezogen auf Copolymer, eines Hydrophobierungsmittels (Silres^{R} Powder D der Wacker Chemie AG).
Dispersionspulver 4 (DP 4):
   In Wasser redispergierbares Vinylacetat-Ethylen-VERSA10^{R}-Copolymer-pulver (69,3 Gew.-% Vinylacetat, 13,4 Gew.-% Ethylen und 17,3 Gew.-% VERSA10^{R}) mit 13 Gew.-%, bezogen auf Copolymer, eines Polyvinylalkohol-Gemisches*.
Dispersionspulver 5 (DP 5):
   In Wasser redispergierbares Vinylacetat-Ethylen-Copolymerpulver (95 Gew.-% Vinylacetat und 5 Gew.-% Ethylen) mit 20 Gew.-%, bezogen auf VAE-Copolymer, eines Polyvinylalkohol-Gemisches*.
* Polyvinylalkoholgemisch mit einem Polyvinylalkohol mit einem Hydrolysegrad von 88 Mol-% und einer Höpplerviskosität von 4 mPas und einem Polyvinylalkohol mit einem Hydrolysegrad von 88 Mol-% und einer Höpplerviskosität von 13 mPas im Gewichtsverhältnis von 2 : 1.

**Tabelle 1: Pulverfarben-Zusammensetzung und Wasseranteil für Dispersionsfarbe:**

| Rezepturbestandteil | Masse [g] |
|---|---|
| Dispersionspulver | 187,9 |
| TiO₂-Pigment (Kronos 2190) | 62,6 |
| Verdicker (Tylose MH 30.000 yp2) | 0,9 |
| Weichmacher (1,6 Hexandiol) | 9,4 |
| CaCO₃-Füllstoff (Omyacarb 5 GU) | 197,9 |
| CaCO₃-Füllstoff (Omyacarb 2 GU) | 171,6 |
| Portlandzement (Dykerhoff weiß) | 4,1 |
| Kalk (Wallhalla Edelkalk Hydrat) | 1,8 |
| Cellulosefaser (Arbocel BE 600-30 PU) | 47,4 |
| Dispergiermittel (Calgon N) | 3,1 |
| Summe feste Komponenten | 686,7 |
| Wasser | 313,3 |
| Total | 1000,0 |

### Testmethoden:

Testung der Scheuerfestigkeit SF (Nassabriebsfestigkeit) der Dispersionsfarben:
Zur Bestimmung der Nassabriebsfestigkeit wurden die aus den Pulverfarben hergestellten Dispersionsfarben jeweils mit der Vliesmethode gemäß ISO 11998 getestet.

Die Dispersionsfarbe wurde jeweils mit einem Applikator in einer Schichtdicke von 300 µm (naß) auf eine Leneta-Folie (PVC-Folie) aufgetragen.

Anschließend wurde 72 Stunden bei Normklima (DIN 50014, 23°C und 50 % relative Luftfeuchtigkeit) gelagert, dann 24 Stunden bei 50°C und schließlich 24 Stunden bei Normklima gelagert.

Es resultierte eine Trockenschichtstärke von ca. 200 µm.

Dann wurde jeweils drei Teststreifen mit den Abmessungen 2,5 cm × 7,5 cm ausgeschnitten und anschließend gewogen.

Damit wurde die Scheuerprüfung mit 200 Zyklen durchgeführt und anschließend wieder gewogen. Aus der Farbdichte der gescheuerten Fläche und dem Massenverlust des Farbfilms wurde dann der Farbabtrag in µm errechnet.

Es wurde jeweils ein Mittelwert aus drei Messungen ermittelt.

Die Scheuerfestigkeit nach 200 Zyklen wird in Klassen bewertet:
Klasse 1 mit Abrieb kleiner 5 µm,
Klasse 2 mit Abrieb zwischen 5 µm und kleiner 20 µm,
Klasse 3 mit Abrieb zwischen 20 µm und kleiner 70 µm.

Messung der Brookfield-Viskositäten BF1, BF10 und BF100 der Dispersi*onsfarben*:
Die Messung der Brookfield-Viskosität der mit den Pulverfarben-Zusammensetzungen hergestellten Dispersionsfarben erfolgte jeweils mit einem Brookfieldviskosimeter BF 35, nach Temperierung auf 23°C, jeweils unter Verwendung der in der Bedienungsanleitung angegebenen Spindel, bei 1 Umdrehung pro Minute (BF1), bei 10 Umdrehungen pro Minute (BF10) und bei 100 Umdrehungen pro Minute (BF100).

Die Messungen erfolgten unmittelbar nach dem Abmischen der Dispersionsfarben (Tabelle 2) oder nach einer Lagerung von 1 Woche bei Normklima (Tabelle 3).

Die Viskosität wird jeweils in mPas angegeben.

Messung der Teilchengrößen Dn und Dw in der Dispersionsfarbe:
Die Messung der zahlenmittleren Teilchengröße Dn und der gewichtsmittleren Teilchengröße Dw der Dispersionsfarben erfolgte mittels Laserbeugung mit dem Beckman Coulter Partikelgrößenmessgerät LS 13320 nach Gerätevorschrift, jeweils nach einer Lagerung bei Normklima über 24 Stunden nach Abmischung.
Die Partikel in der Dispersionsfarbe können sowohl die einzelnen Bestandteile wie Füllstoff, Pigment oder Polymer sein, als auch deren Agglomerate mit variierender Zusammensetzung.

Bestimmung der spezifischen Oberfläche SOF der Teilchen in der Dispersionsfarbe:
Die Bestimmung der spezifischen Oberfläche SOF, der in der Dispersionsfarbe dispergierten Partikel, erfolgte mittels Berechnung ausgehend von den bei der Messung der Teilchengröße erhaltenen Werte.
Die spezifische Oberfläche wird in m²/g Feststoff in der Dispersionsfarbe angegeben.

Bestimmung der Deckkraft der Dispersionsfarben:
Die Deckkraft wurde mit der in der "Richtlinie zur Bestimmung des Deckvermögens" des Verbandes der deutschen Lackindustrie, Ausgabe Juli 2002, beschriebenen Methode gemäß DIN EN 13300 ermittelt.
Die Dispersionsfarben wurden mit einem automatischen Filmapplikator, mit einer Rakel mit einer Spalthöhe von 150 µm und 225 µm, jeweils auf schwarz-weißen Kontrastkarten (Typ 3H der Firma Lenetta) mit Normfarbwert Y über Schwarz von 7 oder weniger und Normfarbwert Y über Weiß von 80 bis 90, aufgebracht.

Die so beschichteten Kontrastkarten wurden 24 Stunden bei 23°C und 50 % relativer Luftfeuchtigkeit getrocknet und anschließend gewogen. Aus der Auftragsmenge in g/m² und der Farbdichte wurde jeweils die Ergiebigkeit in m²/l berechnet.

Mit einem Colorimeter (Elrepho 450X von Datacolor) wurden die Normfarbwerte Y (Farbstandards) über der schwarzen und der weißen Basis gemessen und das "Kontrastverhältnis" in "%" berechnet.

Die so ermittelten Werte für das Kontrastverhältnis wurden in einem Diagramm gegen die entsprechende Ergiebigkeit (m²/l) aufgetragen. Durch Interpolation wurde die Ergiebigkeit E bei 7 bei einem Kontrastverhältnis von 98 % bestimmt.

Je höher die Ergiebigkeit E, desto besser ist die Deckkraft.

Die Messergebnisse sind in Tabelle 2 zusammengefasst.

**Tabelle 2:**

| Pulver | SF µm | BF1 mPas | BF10 mPas | BF100 mPas | Dw µm | Dn µm | SOF m²/g | E 7m²/l |
|---|---|---|---|---|---|---|---|---|
| DP 1 | 7,9 | 157200 | 26000 | 6750 | 6,3 | 0,108 | 15,7 | 91,8 |
| DP 2 | 8,8 | 203000 | 39800 | 8150 | 6,1 | 0,109 | 14,1 | 92,0 |
| DP 3 | 7,2 | 116000 | 19700 | 4690 | 7,3 | 0,108 | 14,8 | 92,8 |
| DP 4 | 8,2 | 154000 | 28300 | 6680 | 7,0 | 0,108 | 14,8 | 92,3 |
| DP 5 | 10,9 | 238000 | 37000 | 7520 | 3,3 | 0,109 | 17,0 | 93,7 |

Polyvinylalkohol ist ein Schutzkolloid, das Dispergiereigenschaften in einer Farbformulierung teilweise übernimmt. Mit einem steigenden Anteil an Polyvinylalkohol im Dispersionspulver der Pulverfarben-Zusammensetzung wird eine feinere Partikelverteilung von Füllstoffen und Pigmenten erreicht, was an der steigenden Größe der spezifischen Partikeloberfläche SOF und einer Verbesserung der Deckkraft E beobachtet werden kann (Vergleich von spezifischer Oberfläche SOF und Deckkraft E der Rezepturen mit Pulver DP 1 und Pulver DP 5).

Die Modifizierung des Mischpolymerisats mit langkettigen Vinylester-Monomeren (DP 2, DP 3, DP 4) bringt einen hydrophobierenden Effekt und kann die Eigenschaften einer Farbe hinsichtlich Anforderungen an wasserabweisenden Eigenschaften verbessern.

Die Modifizierung mit langkettigen Vinylestern bringt zusätzlich einen verzögernden Effekt auf die Anquell-Eigenschaften eines Polymers in einer Farbformulierung, der indirekt über Viskositätsanstieg über die Zeit messbar ist (siehe Vergleich von Rezepturen mit DP 1 und DP 2 in Tabelle 3).

**Tabelle 3:**

| Pulver | BF10 sofort mPas | BF10 1 Woche mPas |
|---|---|---|
| DP 1 | 26000 | 33900 |
| DP 2 | 39800 | 60700 |

In der Rezeptur von Tabelle 4 wurde eine Dispersionsfarbe mit einer Pulverfarben-Zusammensetzung ohne Stellmittel (Zement, Kalk) hergestellt.

In der Pulverfarben-Rezeptur wurde das Dispersionspulver 1 (VAE mit relativ niederem Polyvinylalkohol-Gehalt) mit einem geringen Anteil von Dispersionspulver 5 (VAE mit relativ hohem Polyvinylalkohol-Gehalt abgemischt.

**Tabelle 4:**

| Rezepturbestandteil | Masse [g] |
|---|---|
| Dispersionspulver 1 | 172,8 |
| Dispersionspulver 5 | 9,1 |
| TiO₂-Pigment (Kronos 2190) | 60,6 |
| CaCO₃-Füllstoff (Socal P2) | 236,4 |
| Kaolin-Füllstoff (Mattex Pro) | 121,2 |
| Cellulosefaser (Arbocel BE 600-30 PU) | 45,8 |
| Dispergiermittel (Calgon N) | 3,0 |
| Netzmittel (METOLAT P 588) | 9,1 |
| Summe feste Komponenten | 658,0 |
| Wasser | 342,0 |
| Total | 1000,0 |

Damit wurde eine deutliche Verbesserung der Deckkraft E erhalten: 98,6 % bei 7 m²/l (zum Vergleich: DP 1 alleine in Tabelle 2: 91,8 % bei 7 m²/l ).

## Patentansprüche

1. Verwendung einer Pulverfarben-Zusammensetzung zur Herstellung von wässrigen Dispersionsfarben,
wobei die Pulverfarben-Zusammensetzung a) mindestens ein in Wasser redispergierbares Polymerpulver, b) Pigment und Füllstoff, c) gegebenenfalls weitere Zusatzstoffe und gegebenenfalls ein oder mehrere hydraulische Bindemittel ausgewählt aus der Gruppe umfassend Zement, Gips, Kalk und Wasserglas enthält, **dadurch gekennzeichnet, dass**
das in Wasser redispergierbare Polymerpulver a) ein mit Polyvinylalkohol stabilisiertes Mischpolymerisat ist, auf der Basis von a1) 50 bis 95 Gew.-% Vinylacetat, a2) 1 bis 30 Gew.-% Ethylen, a3) 0 bis 20 Gew.-% Vinylester von langkettigen, gegebenenfalls verzweigten C₃- bis C₁₂-Carbonsäuren, a4) 0 bis 10 Gew.-% weiterer damit copolymerisierbarer ethylenisch ungesättigter Comonomere, wobei sich die Angaben in Gew.-% jeweils auf 100 Gew.-% aufaddieren, und
als Polyvinylalkohol ein Gemisch aus mindestens einem Polyvinylalkohol mit einem Hydrolysegrad von 80 bis 95 Mol-% und einer Viskosität nach Höppler (4 %-ige wässrige Lösung, Methode nach Höppler bei 20°C, DIN 53015) von 1 bis 5 mPas und mindestens einem Polyvinylalkohol mit einem Hydrolysegrad von 80 bis 95 Mol-% und einer Viskosität nach Höppler von 6 bis 40 mPas enthalten ist,
mit der Maßgabe, dass eine hydraulische Bindemittel enthaltende Pulverfarben-Zusammensetzung 0,1 bis 10 Gew.-% an hydraulischem Bindemittel enthält, bezogen auf das Gesamtgewicht der Pulverfarben-Zusammensetzung.

2. Verwendung einer Pulverfarben-Zusammensetzung zur Herstellung von wässrigen Dispersionsfarben nach Anspruch 1, **dadurch gekennzeichnet, dass** ein Mischpolymerisat auf der Basis von 80 bis 95 Gew.-% Vinylacetat und 5 bis 20 Gew.-% Ethylen, und gegebenenfalls noch Hilfsmonomere a4) enthalten ist.

3. Verwendung einer Pulverfarben-Zusammensetzung zur Herstellung von wässrigen Dispersionsfarben nach Anspruch 1, **dadurch gekennzeichnet, dass** ein Mischpolymerisat auf der Basis von 60 bis 85 Gew.-% Vinylacetat a1), 1 bis 30 Gew.-% Ethylen a2) und 10 bis 20 Gew.-% Vinylester a3) von langkettigen, gegebenenfalls verzweigten C₃- bis C₁₂-Carbonsäuren, und gegebenenfalls noch Hilfsmonomere a4) enthalten ist.

4. Verwendung einer Pulverfarben-Zusammensetzung zur Herstellung von wässrigen Dispersionsfarben nach Anspruch 1 bis 3, **dadurch gekennzeichnet, dass** das in Wasser redispergierbare Polymerpulver einen Polyvinylalkohol-Anteil von 2 bis 30 Gew.-%, bezogen auf das Gewicht des Mischpolymerisats, hat.

5. Verwendung einer Pulverfarben-Zusammensetzung zur Herstellung von wässrigen Dispersionsfarben nach Anspruch 1 bis 4, **dadurch gekennzeichnet, dass** ein in Wasser redispergierbares Polymerpulver a) mit erhöhtem Polyvinylalkohol-Anteil von 20 bis 30 Gew.-%, alleine oder im Gemisch mit einem in Wasser redispergierbaren Polymerpulver a) mit geringerem Polyvinylalkohol-Anteil in der Pulverfarben-Zusammensetzung enthalten ist.

6. Verwendung einer Pulverfarben-Zusammensetzung zur Herstellung von wässrigen Dispersionsfarben nach Anspruch 1 bis 5, **dadurch gekennzeichnet, dass** die Pulverfarben-Zusammensetzung ein oder mehrere hydraulische Bindemittel enthält.

7. Verwendung einer Pulverfarben-Zusammensetzung zur Herstellung von wässrigen Dispersionsfarben nach Anspruch 1 bis 5, **dadurch gekennzeichnet, dass** die Pulverfarben-Zusammensetzung ein oder mehrere Stellmittel enthält.

## Claims

1. Use of a powder paint composition for producing aqueous emulsion paints,
where the powder paint composition comprises a) at least one water-redispersable polymer powder, b) pigment and filler, c) optionally further adjuvants, and optionally one or more hydraulic binders selected from the group encompassing cement, gypsum, lime, and waterglass,**characterized in that** the water-redispersable polymer powder is a) a polyvinyl alcohol-stabilized copolymer based on a1) 50 to 95 wt% of vinyl acetate, a2) 1 to 30 wt% of ethylene, a3) 0 to 20 wt% of vinyl esters of long-chain, optionally branched C₃ to C₁₂ carboxylic acids, a4) 0 to 10 wt% of further ethylenically unsaturated comonomers copolymerizable therewith, the amounts in wt% adding up in each case to 100 wt%, and
the polyvinyl alcohol comprises a mixture of at least one polyvinyl alcohol having a degree of hydrolysis of 80 to 95 mol% and a Höppler viscosity (4% aqueous solution, Höppler method at 20°C, DIN 53015) of 1 to 5 mPas and at least one polyvinyl alcohol having a degree of hydrolysis of 80 to 95 mol% and a Höppler viscosity of 6 to 40 mPas, with the proviso that a powder paint composition comprising hydraulic binders comprises 0.1 to 10 wt% of hydraulic binder, based on the total weight of the powder paint composition.

2. Use of a powder paint composition for producing aqueous emulsion paints according to Claim 1, **characterized in that** a copolymer is comprised based on 80 to 95 wt% of vinyl acetate and 5 to 20 wt% of ethylene, and optionally auxiliary monomers a4) as well.

3. Use of a powder paint composition for producing aqueous emulsion paints according to Claim 1, **characterized in that** a copolymer is comprised based on 60 to 85 wt% of vinyl acetate a1), 1 to 30 wt% of ethylene a2) and 10 to 20 wt% of vinyl esters a3) of long-chain, optionally branched C₃ to C₁₂ carboxylic acids, and optionally auxiliary monomers a4) as well.

4. Use of a powder paint composition for producing aqueous emulsion paints according to Claim 1 to 3, **characterized in that** the water-redispersable polymer powder has a polyvinyl alcohol fraction of 2 to 30 wt%, based on the weight of the copolymer.

5. Use of a powder paint composition for producing aqueous emulsion paints according to Claim 1 to 4, **characterized in that** a water-redispersable polymer powder a) with an increased polyvinyl alcohol fraction of 20 to 30 wt% is comprised, alone or in a mixture with a water-redispersable polymer powder a) with a lower polyvinyl alcohol fraction, in the powder paint composition.

6. Use of a powder paint composition for producing aqueous emulsion paints according to Claim 1 to 5, **characterized in that** the powder paint composition comprises one or more hydraulic binders.

7. Use of a powder paint composition for producing aqueous emulsion paints according to Claim 1 to 5, **characterized in that** the powder paint composition comprises one or more modifiers.

## Revendications

1. Utilisation d'une composition de peinture en poudre pour la préparation de peintures en dispersion aqueuse, dans laquelle la composition de peinture en poudre contient a) au moins une poudre de polymère redispersible dans l'eau, b) un pigment et une charge, c) éventuellement d'autres additifs et éventuellement un ou plusieurs liants hydrauliques choisis dans le groupe comprenant le ciment, le gypse, le calcaire et le verre d'eau, **caractérisée en ce que** la poudre de polymère redispersible dans l'eau est a) un copolymère stabilisé par un poly (alcool vinylique), à base de a1) 50 à 95 % en poids d'acétate de vinyle, a2) 1 à 30 % en poids d'éthylène, a3) 0 à 20 % en poids d'esters de vinyle d'acides carboxyliques en C₃₋₁₂ à chaîne longue, éventuellement ramifiés, a4) 0 à 10 % en poids d'autres comonomères éthyléniquement insaturés copolymérisables avec ceux-ci, les données en % en poids totalisant à chaque fois 100 % en poids, et
en tant que poly(alcool vinylique), un mélange d'au moins un poly(alcool vinylique) doté d'un degré d'hydrolyse de 80 à 95 % en moles et d'une viscosité selon Höppler (solution aqueuse à 4 %, méthode selon Höppler à 20 °C, norme DIN 53015) de 1 à 5 mPas et d'au moins un poly(alcool vinylique) doté d'un degré d'hydrolyse de 80 à 95 % en moles et d'une viscosité selon Höppler de 6 à 40 mPas, étant contenu,
à la condition qu'une composition de peinture en poudre contenant un liant hydraulique contienne 0,1 à 10 % en poids de liant hydraulique, par rapport au poids total de la composition de peinture en poudre.

2. Utilisation d'une composition de peinture en poudre pour la préparation de peintures en dispersion aqueuse selon la revendication 1, **caractérisée en ce qu'**un copolymère à base de 80 à 95 % en poids d'acétate de vinyle et de 5 à 20 % en poids d'éthylène, et éventuellement encore de monomères auxiliaires a4), est contenu.

3. Utilisation d'une composition de peinture en poudre pour la préparation de peintures en dispersion aqueuse selon la revendication 1, **caractérisée en ce qu'**un copolymère à base de 60 à 85 % en poids d'acétate de vinyle a1), 1 à 30 % en poids d'éthylène a2) et 10 à 20 % en poids d'esters de vinyle a3) d'acides carboxyliques en C₃₋₁₂ à chaîne longue, éventuellement ramifiés, et éventuellement encore de monomères auxiliaires a4), est contenu.

4. Utilisation d'une composition de peinture en poudre pour la préparation de peintures en dispersion aqueuse selon les revendications 1 à 3, **caractérisée en ce que** la poudre de polymère redispersible dans l'eau possède une proportion en poly(alcool vinylique) de 2 à 30 % en poids, par rapport au poids du copolymère.

5. Utilisation d'une composition de peinture en poudre pour la préparation de peintures en dispersion aqueuse selon les revendications 1 à 4, **caractérisée en ce qu'**une poudre de polymère redispersible dans l'eau a) dotée d'une proportion augmentée en poly(alcool vinylique) de 20 à 30 % en poids, seule ou en mélange avec une poudre de polymère redispersible dans l'eau a) dotée d'une proportion réduite en poly(alcool vinylique), est contenue dans la composition de peinture en poudre.

6. Utilisation d'une composition de peinture en poudre pour la préparation de peintures en dispersion aqueuse selon les revendications 1 à 5, **caractérisée** ce que la composition de peinture en poudre contient un ou plusieurs liants hydrauliques.

7. Utilisation d'une composition de peinture en poudre pour la préparation de peintures en dispersion aqueuse selon les revendications 1 à 5, **caractérisée en ce que** la composition de peinture en poudre contient un ou plusieurs moyens de réglage.
